# EUROPEAN PATENT APPLICATION

(11) **EP 2 172 302 A1**
(43) Date of publication of application: **07.04.2010**
(21) Application number: 08778004.5
(22) Date of filing: 09.07.2008
(51) Int. Cl.: B23Q 5/52, B23Q 1/64, B23Q 5/58, B23Q 16/02, F16F 7/00

(54) **DEVICE FOR PREVENTING BREAKAGE OF TILTING ROTARY TABLE INDEXING DEVICE**

(30) Priority: 13.07.2007 JP 2007184725
(71) Applicant: Tsudakoma Kogyo Kabushiki Kaisha, Kanazawa-shi, Ishikawa 921-8650 (JP)
(72) Inventor: YONENAGA, Takeshi, Kanazawa-shi Ishikawa 921-8650 (JP)
(74) Representative: Samson & Partner
(86) International application number: PCT/JP2008/062395
(87) International publication number: WO 2009/011260

(57) **Abstract**

In a tilting table indexing device driven by a direct-drive motor, a tilting table is prevented from rotating beyond an allowable rotation range when power is shut off in an emergency, such as power outage, and thus a breakage accident of, for example, a tool or a workpiece is reliably prevented from occurring. In a tilting table indexing device (1), in which a rotary member (3) such as a table (4) is rotated within a predetermined normal rotation angle range by a direct-drive motor (9) to tilt the table (4) and in which the tilted table (4) is held by activation of a holding mechanism (10), an elastically displaceable member (11) having a pressure receiving surface (12) is provided at one of the rotary member (3) and a frame (6) of the tilting table indexing device (1), and an engaging portion (13) capable of contacting the pressure receiving surface (12) is provided at the other of the rotary member (3) and the frame (6). When the rotary shaft (5) rotates beyond the normal rotation angle range because of free rotation of the rotary member (3) in an emergency, the elastically displaceable member (11) absorbs the kinetic energy of the rotary member (3) and stops the rotary member (3) before a danger angle range.

## Description

### Technical Field

The present invention relates to a technique that prevents a tilting table from rotating beyond an allowable rotation range when power is shut off in an emergency, such as power outage, in a tilting table indexing device driven by a direct-drive motor, which is so-called a DD motor.

### Background Art

Patent documents 1 and 2 each disclose a clamp mechanism that stops rotation of, for example, a table or a shaft, in a rotary indexing device (rotary table device), in which a table or a shaft is rotated by a DD motor (built-in motor).

A clamp mechanism disclosed in patent document 1 holds a clamped state (stopped state) of a rotary table because a clamp ring is tightly fitted to a table, and releases the tightly fitted state by supply of oil pressure only when the table rotates, so that the table becomes a free state. Even when the pressure oil is not supplied because of power outage or the like, the tightly fitted clamp ring prevents the table from rotating.

A clamp mechanism disclosed in patent document 2 prevents a table from unintentionally rotating because of power outage or the like by providing clamping such that a piston contacts a brake plate with operating fluid, and by constantly urging the piston to the brake plate using a spring.

However, with the above-described techniques, when power is suddenly shut off because of power outage or the like during rotation of the table, a time lag exists between the timing, at which power is shut off, to the timing, at which the channel of the operating fluid is switched and thereby a clamping force is actually produced. Thus, for example, if power outage or the like occurs when the table rotates to an angle close to the limit of the allowable rotation range, the table may rotate beyond the allowable rotation range because of its rotational inertia or eccentric load before the clamping force is produced and the table is stopped. Consequently, a workpiece, a table, or the like, may collide with a cutting tool or a main shaft spindle and may be broken.
Patent Document 1: Japanese Unexamined Patent Application Publication No. 11-99423
Patent Document 2: Japanese Unexamined Patent Application Publication No. 2006-95668

### Disclosure of Invention

### Problems to be Solved by the Invention

Accordingly, an object of the present invention is to prevent a tilting table from rotating beyond an allowable rotation range and to reliably prevent a breakage accident of, for example, a tool or a workpiece, when power is shut off in an emergency, such as power outage, in a tilting table indexing device driven by a direct-drive motor, which is so-called a DD motor.

### Means for Solving the Problems

To attain the object, the invention provides a tilting table indexing device (1). The tilting table indexing device (1) includes a rotary member (3) and a frame (6).
The rotary member (3) has a table (4) and a rotary shaft (5), the rotary shaft (5) extending in an extending direction of the table (4) and being integral with the table (4). The frame (6) has a pair of supporting devices (7, 7') and a pedestal (8), the supporting devices (7, 7') supporting both sides of the rotary shaft (5) and mounted on the pedestal (8). At least one of the supporting devices (7, 7') has built therein a direct-drive motor (9) and a holding mechanism (10), the direct-drive motor (9) driving the rotary shaft (5) for indexing an angle of the rotary shaft (5), the holding mechanism (10) holding the angle of the rotary shaft (5). During an indexing operation of the table (4), the rotary shaft (5) is rotated by the direct-drive motor (9) to a desirable angle within a predetermined normal rotation angle range to tilt the table (4), and the tilt angle of the tilted table (4) is held by activation of the holding mechanism (10). In the tilting table indexing device (1), an elastically displaceable member (11) and an engaging portion (13) are provided, the elastically displaceable member (11) provided at one of the rotary member (3) and the frame (6) and having a pressure receiving surface (12), the engaging portion (13) provided at the other of the rotary member (3) and the frame (6), the positional relationship between the pressure receiving surface (12) and the engaging portion (13) is determined such that the engaging portion (13) contacts the pressure receiving surface (12) when at least the rotary shaft (5) rotates beyond the normal rotation angle range. When the rotary shaft (5) rotates beyond the normal rotation angle range because of free rotation of the rotary member (3) in an emergency, the pressure receiving surface (12) of the elastically displaceable member (11) is elastically displaced and absorbs the kinetic energy of the rotary member (3) to stop the rotary member (3) before a danger angle range.

Also, the elastically displaceable member (11) is arranged such that the pressure receiving surface (12) of the elastically displaceable member (11) does not contact the engaging portion (13) provided at the other of the rotary member (3) and the frame (6) when the rotary shaft (5) is within the normal rotation angle range.

Further, an engaging lever (14) having the engaging portion (13) extending outward in a radial direction of the rotary shaft (5) is integrally provided with the rotary member (3). the engaging lever (14) integrally provided with the rotary member (3). The elastically displaceable member (11)is attached to the frame (6) at a position on a rotation path of the engaging lever (14) such that the pressure receiving surface (12) can contact the engaging portion (13) when the rotary shaft (5) rotates beyond the normal rotation angle range.

Furthermore, the elastically displaceable member (11) supports the pressure receiving surface (12) displaceably in an advance-retract direction, and the elastically displaceable member (11) serves as buffer means for applying reaction to the pressure receiving surface (12) when the pressure receiving surface (12) is retracted.

### Advantages

With the invention according to claim 1, in the tilting table indexing device (1), in which the table (4) is tilted by the direct-drive motor (9) and is held by activation of the holding mechanism (10), the elastically displaceable member (11) having the pressure receiving surface (12) is provided at one of the rotary member (3) and the frame (6) of the tilting table indexing device (1), and the engaging portion (13) capable of contacting the pressure receiving surface (12) is provided at the other of the rotary member (3) and the frame (6). The positional relationship of both the pressure receiving surface (12) and the engaging portion (13) are determined such that the pressure receiving surface (12) of the elastically displaceable member (11) is elastically displaced and absorbs the kinetic energy of the rotary member (3) to stop the rotary member (3) before the danger angle range when the rotary shaft (5) rotates beyond the normal rotation angle range because of free rotation of the rotary member (3) in an emergency. Even when the rotary shaft (5) rotates beyond the normal rotation angle range because of free rotation of the rotary member (3) in an emergency such as power outage while no breaking force of the holding mechanism (10) is applied to the rotary member (3) including the table (4), the pressure receiving surface (12) of the elastically displaceable member (11) is elastically displaced and absorbs the kinetic energy of the rotary member (3) to stop the rotary member (3) at a predetermined angle before the danger angle. Thus, a breakage accident can be reliably prevented.

With the invention according to claim 2, the elastically displaceable member (11) is arranged such that the pressure receiving surface (12) of the elastically displaceable member (11) does not contact the engaging portion (13) provided at the other of the rotary member (3) and the frame (6) when the rotary shaft (5) is within the normal rotation angle range. Thus, during driving within the normal rotation angle range, no breaking force of the elastically displaceable member (11) is applied to the table (4). Thus, a load to be directly applied to the direct-drive motor (9) can be reduced.

With the invention according to claim 3, the engaging lever (14) having the engaging portion (13) extending outward in the radial direction of the rotary shaft (5) is integrally provided with the rotary member (3). The elastically displaceable member (11) is attached to the frame (6) at the position on the rotation path of the engaging lever (14)such that the pressure receiving surface (12) can contact the engaging portion (13) when the rotary shaft (5) rotates beyond the normal rotation angle range. Even when the rotary member (3) including the tilting table (4) rotates beyond the normal rotation angle range while no breaking force of the holding mechanism (10) is applied to the rotary member (3), the elastically displaceable member (11) attached to the frame (6) can stop the rotation of the tilting table (4). Thus, a breakage accident can be prevented from occurring.

With the invention according to claim 4, the elastically displaceable member (11) supports the pressure receiving surface (12) displaceably in the advance-retract direction, and the elastically displaceable member (11) serves as the buffer means for applying reaction to the pressure receiving surface (12) when the pressure receiving surface (12) is retracted. Accordingly, the kinetic energy of the rotary member (3) including the tilting table (4), which is being freely rotatable in an emergency such as power outage, can be efficiently absorbed, and the rotary member (3) can be stopped at a predetermined angle before the danger angle, at which a breakage accident may occur. Thus, a breakage accident can be reliably prevented from occurring.

### Brief Description of Drawings

[Fig. 1] Fig. 1 is a general view of a tilting table indexing device.
[Fig. 2] Fig. 2 is a cross-sectional view of a supporting device of the tilting table indexing device.
[Fig. 3] Fig. 3 is a side view of a breakage preventing device of the tilting table indexing device.
[Fig. 4] Fig. 4 is a side view and a front view of the breakage preventing device of the tilting table indexing device.
[Fig. 5] Fig. 5 is a side view of a breakage preventing device of the tilting table indexing device.

### Reference Numerals

- 1: tilting table indexing device
- 2: breakage preventing device
- 3: rotary member
- 4: table
- 5, 5': rotary shaft
- 6: frame
- 7, 7': supporting device
- 7a: frame member
- 7b: through hole
- 7c: mounting portion
- 8: pedestal
- 9: direct-drive motor
- 10: holding mechanism
- 11, 11': elastically displaceable member
- 12, 12': pressure receiving surface
- 13, 13': engaging portion
- 14, 14': engaging lever
- 15, 15': arm
- 16: mount surface
- 17: roller bearing
- 18: rotor
- 19: stator
- 20: rotary disc
- 21: rotation detector
- 22: rotation position detecting device
- 23: clamp sleeve
- 24: pressure chamber
- 25: solenoid controlled valve
- 26: cover plate
- 27: cover
- 28: pressure source
- 29: circular table device
- 30: arm

### Best Modes for Carrying Out the Invention

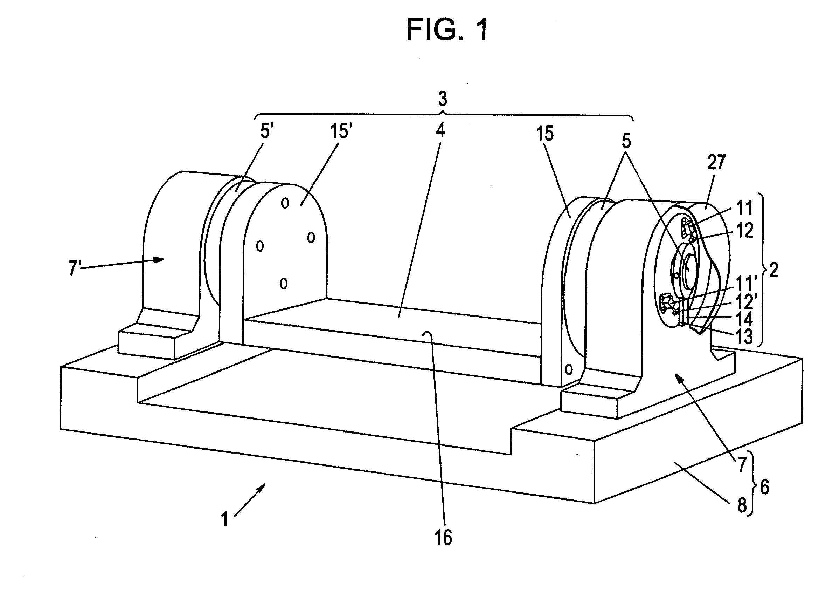

Fig. 1 illustrates a tilting table indexing device, which is the presupposition of the present invention. In particular, Fig. 1 also illustrates a state in which a breakage preventing device 2, which is the feature of the present invention, is mounted on the tilting table indexing device.

In Fig. 1, a tilting table indexing device 1 includes a rotatable rotary member 3 having a table 4, and rotary shafts 5, 5' extending in an extending direction of the table 4 and being integral with the table 4 with arms 15, 15' interposed therebetween. A workpiece (not shown) is mounted on the table 4. This embodiment employs a cradle-type table, in which the pair of left and right arms 15, 15' cause the center line of the rotary shafts 5, 5' to be shifted from a mount surface 16 of the table 4 on which the workpiece is mounted. The table 4 is not limited to the illustrated cradle-type table. A circular table (turn table) may be mounted on the cradle-type table 4, or both sides of a frame defining a circular table device may be directly coupled to the rotary shafts 5. In any of the two cases, the table of the present invention corresponds to the circular table (turn table). In particular, the rotary member 3 of the present invention is an idea that contains a workpiece (not shown) to be mounted on the table 4, a circular table, and the like, in addition to the table 4, the rotary shafts 5, 5', and the arms 15, 15'.

The table 4 is rotatably supported by a pair of left and right supporting devices 7, 7' that support both sides of the rotary shaft 5, 5'. The supporting devices 7, 7' are mounted on a pedestal 8. The supporting devices 7, 7' and the pedestal 8 define a frame 6 of the tilting table indexing device 1.

At least one of the supporting devices 7, 7' has a direct-drive motor 9 and a holding mechanism 10 built therein. The direct-drive motor 9 drives the rotary shaft 5 for indexing an angle of the rotary shaft 5. The holding mechanism 10 holds the angle of the rotary shaft 5. In this embodiment, the one supporting device 7 has built therein the direct-drive motor 9 and the holding mechanism 10 that uses fluid pressure, and hence the supporting device 7 serves as a driving supporting device 7. The other supporting device 7' does not have built therein such a motor or a mechanism, and hence the supporting device 7' serves as a driven supporting device 7'. The driving supporting device 7 is called a vertically arranged indexing device that drives a table for indexing with respect to a horizontally arranged rotary shaft. The driven supporting device 7' is called a supporting spindle that supports the table rotatably around the horizontally arranged rotary shaft 5'.

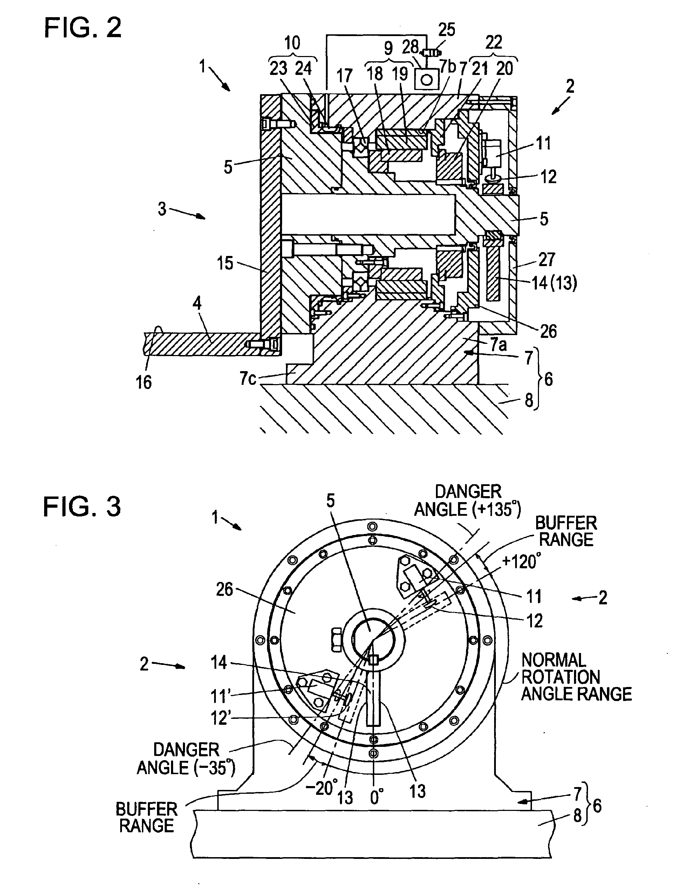

Fig. 2 is a cross-sectional view showing the driving supporting device 7 having built therein the direct-drive motor 9 and the holding mechanism 10. In Fig. 2, the driving supporting device 7 mainly includes a frame member 7a having a horizontal through hole 7b and a mounting portion 7c at a lower position, the frame member 7a attached to the pedestal 8 through the mounting portion 7c; the rotary shaft 5 extending through the through hole 7b and rotatably supported by the frame member 7a; the direct-drive motor 9 that is a rotation drive source of the rotary shaft 5; and the holding device 10 arranged in the space between the rotary shaft 5 and the through hole 7b. The rotary shaft 5 is arranged coaxially with the through hole 7b of the frame member 7a and rotatably supported by the frame member 7a through a roller bearing 17 having one end attached to the frame member 7a. A table surface is provided at an end portion of the rotary shaft 5 proximate to the table. The table surface extends in a direction orthogonal to the rotary shaft 5, or in the circumferential direction. The arm 15 is attached to the table surface by a screw member. The direct-drive motor 9 includes a rotor 18 fixed around the outer periphery of the rotary shaft 5 and being rotatable with the rotary shaft 5; and a stator 19 extending around the rotor 18 to face the rotor 18 and fixed to the frame member 7a at a position proximate to the through hole 7b. The rotary shaft 5 is driven by the direct-drive motor 9 built in the frame member 7a. Also, a rotation position detecting device 22 is attached to a distal end portion of the rotary shaft 5 farthest from the table surface. The rotation position detecting device 22 detects the rotation angle of the rotary shaft 5 (table 4). The rotation position detecting device 22 includes a rotary disc 20 attached to the rotary shaft 5 and being rotatable with the rotary shaft 5; and a rotation detector 21 attached to the frame member 7a at a position proximate to the rotary disc 20. The rotation detector 21 detects the phase of the rotary disc 20 and outputs the detected phase as an angular detection signal of the rotary shaft 5.

In addition, the frame member 7a has a space with steps in the radial direction for a large-diameter portion of the rotary shaft 5. A ring-shaped clamp sleeve 23 is arranged in the space between the frame member 7a and the large-diameter portion. The clamp sleeve 23 serves as the holding mechanism 10 and has an L-shaped cross section. The clamp sleeve 23 has a flange portion and a cylindrical portion extending in the axial direction (both not shown). The clamp sleeve 23 has a through hole through which the rotary shaft 5 extends with a slight gap interposed therebetween. The clamp sleeve 23 is fixed to an attachment portion (not shown) of the frame member 7a by a plurality of screw members inserted into the flange portion. The clamp sleeve 23 has an annular groove in the outer periphery of the cylindrical portion of the clamp sleeve 23. The annular groove is dented inward from the outer periphery. A pressure chamber 24 is provided in the space between the inner peripheral end of the frame member 7a and the annular groove of the clamp sleeve 23. The pressure chamber 24 is connected to a pressure source 28 through a channel (not shown) provided in the frame member 7a and a solenoid controlled valve 25. Pressure oil is supplied to the pressure chamber 24 from the pressure source 28 through the solenoid controlled valve 25 during a clamping operation. When the pressure oil is supplied to the pressure chamber 24, a thin-wall portion of the clamp sleeve 23 in an area occupied by the annular groove bends and bulges toward the rotary shaft 5. The thin-wall portion clamps the rotary shaft 5 by being pressed to the rotary shaft 5 from the outside. When the solenoid controlled valve 25 switches the channel communicating with the pressure chamber 24 to a channel for discharge, the shape of the clamp sleeve 23 is restored to the original shape, and hence the rotary shaft 5 becomes unclamped.

The structures in the supporting device 7, such as the direct-drive motor 9, the holding mechanism 10, and the rotation position detecting device 22, have substantially cylindrical shapes. These cylindrical shapes are sealed with a cover plate 26 attached to the end portion of the frame member 7a farthest from the table. The cover plate 26 has a through hole into which an oil seal is fitted. The rotary shaft 5 protrudes from the through hole and extends in the axial direction. A breakage preventing device 2 (which will be described below) can be attached to and detached from the rotary shaft 5.

The breakage preventing device 2, which is the feature of the present invention, is provided at an end portion of the supporting device 7 farthest from the table surface.
The breakage preventing device 7 mainly includes an engaging lever 14 attached to the protruding rotary shaft 5, and a pair of elastically displaceable members 11, 11' attached to the cover plate 26. The elastically displaceable members 11, 11' determine the positions of pressure receiving surfaces 12 in accordance with a movable range of the engaging lever 14 (in other words, a tilt angle range of the rotary shaft 5). The engaging lever 14 includes a base portion engaged with the rotary shaft 5 and an engaging portion 13 extending outward in the radial direction from the base portion. The base portion of the engaging lever 14 is integrally attached to the end portion of the rotary shaft 5 farthest from the table (the end portion being a part of the rotary member 3) by a key and a set screw (both not shown). In this embodiment, the elastically displaceable members 11, 11' each use a buffer device having a combination of a spring and an oil damper. In particular, the elastically displaceable members 11, 11' mainly include the pressure receiving surfaces 12, 12', cylinder portions that support the pressure receiving surfaces 12, 12' displaceably in an advance-retract direction, and buffer means. The buffer means include compression springs and oil dampers in the cylinder portions. Each compression spring provides reaction to corresponding one of the pressure receiving surfaces 12, 12' and each oil damper provides reaction to the movement of corresponding one of the pressure receiving surfaces 12, 12' in the advance-retract direction when the engaging portion 13 contacts the pressure receiving surface 12, 12' and the pressure receiving surface 12, 12' is retracted. Thus, the buffer means urges the pressure receiving surface 12, 12' to be advanced by reaction force of the compression spring. In this embodiment, the elastically displaceable member 11 and the engaging lever 14 are provided in the supporting device 7 having the direct-drive motor 9 built therein. Alternatively, the elastically displaceable member 11 and the engaging lever 14 may be provided in the driven supporting device 7' that does not have the direct-drive motor 9 built therein. Still alternatively, the elastically displaceable member 11 and the engaging lever 14 may be provided in each of both supporting devices. A substantially cylindrical cover 27 is attached to the end portion of the frame member 7a farthest from the table 4. The cover 27 has a through hole at its center. The cover 27 covers the breakage preventing device 7 while allowing the shaft end of the rotary shaft 5 to be exposed.

Fig. 3 is a side view showing the tilting table indexing device 1 in a state in which the cover 27 shown in Fig. 2 is removed. The pressure receiving surfaces 12, 12' of the elastically displaceable members 11, 11' indicated by solid lines in this figure have natural length while no external force is applied, and the mount surface 16 of the table 4 is horizontal although not shown. At this time, the engaging lever 14 is located at a perpendicularly lower position. This position is assumed as at a rotation angle of 0° for convenience, and the counterclockwise direction is assumed as the plus direction. The table 4 (rotary member 3) is operated within a predetermined normal rotation angle range. The "normal rotation angle range" is a range within which the table 4 rotates through a normal operation of the tilting table indexing device 1, and is determined by the specification of the tilting table indexing device 1. In this embodiment, this range is from -20° to +120°. Within this range, the rotary member 3, i.e., the table 4, a workpiece mounted on the table 4, etc. do not interfere with the frame 6, a peripheral tool (not shown), or the like. Also, angles beyond the normal rotation angle range, at which the table 4 and the like is subjected to interfere with the frame 6 and the like in design, are called danger angles. For example, in this embodiment, danger angles are in a range from -35° to +135°.

The pair of elastically displaceable members 11, 11' are located on the rotation path of the engaging lever 14. The elastically displaceable members 11, 11' are attached to the cover plate 26 by a plurality of screw members (not shown) such that the engaging portion 13 of the engaging lever 14 contacts the pressure receiving surface 12, 12' when the engaging portion 13 reaches a position proximate to one of both ends of the normal rotation angle range. The attachment positions of the elastically displaceable members 11, 11' are determined such that the engaging portion 13 can contact either of the pressure receiving surfaces 12, 12' at least when the table 4 (rotary member 3) rotates beyond the normal rotation angle range. In other words, the engaging portion 13 contacts the pressure receiving surface 12, 12' of the elastically displaceable member 11, 11' with the natural length before the rotation angle of the table 4 becomes -20° or smaller, or +120° or larger. The movable amount of the pressure receiving surface 12, 12' of the elastically displaceable member 11, 11', that is, the stroke of the elastically displaceable member 11, 11' is equal to or larger than a slant distance by which the engaging portion 13 moves when the table 4 rotates from -20° or from +120° to a danger angle. The reaction of the elastically displaceable member 11, 11' is properly determined so that the reaction can absorb all kinetic energy of the rotary member 3 before the table 4 rotates to a danger angle (more specifically, an angle of -35° or +135°).

Each of the elastically displaceable members 11, 11' may be provided such that the pressure receiving surface 12, 12' contacts the engaging portion 13 even when the table 4 is within the normal rotation angle range. In this embodiment, each of the elastically displaceable members 11, 11' is arranged such that the pressure receiving surface 12, 12' of the elastically displaceable member 11, 11' does not contact the engaging portion 13 while the table 4 (rotary shaft 5) is within the normal rotation angle range, and such that the reaction of the elastically displaceable members 11, 11' is not applied to the table 4 during driving within the normal rotation angle range. Thus, a load to be applied to the direct-drive motor 9 can be reduced. The attachment positions of the elastically displaceable members 11, 11' may be adjustable by providing a plurality of screw holes for attachment or by providing a long hole. With this configuration, the attachment positions of the elastically displaceable members 11, 11' may be changed in accordance with, for example, the specification of the tilting table indexing device and the weight of the rotary member 3, so as to absorb all kinetic energy of the rotary member 3 before the table 4 is rotated to a danger angle. Alternatively, a plurality of elastically displaceable members 11, 11' capable of producing different reactions may be prepared and selectively attached depending on, for example, the weight of the rotary member 3.

The operation of the tilting table device 1 including the breakage preventing device 2 will be described below. During an indexing operation (normal operation) of the table 4, a controller (not shown) rotates the rotary shaft 5 to a desirable tilt angle, which is preliminary programmed to be within the normal rotation angle range, by driving with the direct-drive motor 9 using the rotation position detecting device 22, so as to tilt the table 4. When the table 4 reaches the desirable tilt angle, the holding mechanism 10 is activated by supply with the pressure oil through the solenoid controlled valve 25, so that the table 4 is held at the desirable tilt angle. At this time, since the tilt angle of the table 4 is within the normal rotation angle range, the elastically displaceable member 11 does not contact the engaging portion 13.

In an emergency, such as power outage, in particular, when the holding mechanism 10 is not operated or in the course of the operation, no torque is produced by the direct-drive motor 9 for the rotary member 3. Thus, the rotary member 3 (table 4, rotary shaft 5, workpiece, etc.) is freely rotated because of its rotational inertia or eccentric load. However, when the rotary shaft 5 (table 4) rotates beyond the normal rotation angle range because of the free rotation, one of the pressure receiving surface 12 of the elastically displaceable member 11 and the pressure receiving surface 12' of the elastically displaceable member 11' attached to the frame 2 contacts the engaging portion 13 integrally attached to the rotary member 3 (the other), and receives the engaging portion 13. At this time, one of the pressure receiving surfaces 12, 12' of the elastically displaceable members 11, 11' to be brought into contact is elastically displaced by the elastic force of the compression spring and the reaction of the oil damper. In other words, the pressure receiving surface 12, 12' absorbs the kinetic energy of the rotary member 3 by applying reaction force and while the position of the pressure receiving surface 12, 12' is retracted. The rotary member 3 during free rotation is reliably stopped before the danger angle range while the pressure receiving surface 12 of the elastically displaceable member 11 is elastically displaced even if the above-described holding mechanism 10 cannot be operated.

In this embodiment, the engaging portion 13 (engaging lever 14) is a member separated from the rotary member 3. However, a member of the rotary member 3, for example, the arm 15 may serve as the engaging portion 13, and the elastically displaceable member 11 may contact the arm 15. In this embodiment, the elastically displaceable member 11 is provided at the cover plate 26. However, the elastically displaceable member 11 may be provided at the frame 6 or a member fixed to the frame 6. The elastically displaceable member 11 does not have to be defined by the buffer means having the combination of the compression spring and the oil damper described in this embodiment. The elastically displaceable member 11 may be defined by a member selected from a fluid pressure damper, a compression spring, a plate spring, an air spring, and a low-repulsion material (low-rebound foam, lather, etc.), or may be defined by a combination of two or more members selected from the above-mentioned members. When a low-repulsion material is used, a pressure receiving surface 14 contacts the engaging portion 13 of the elastically displaceable member 11 and receives the pressure to be deformed in the retract direction while applying reaction to the engaging portion 13.

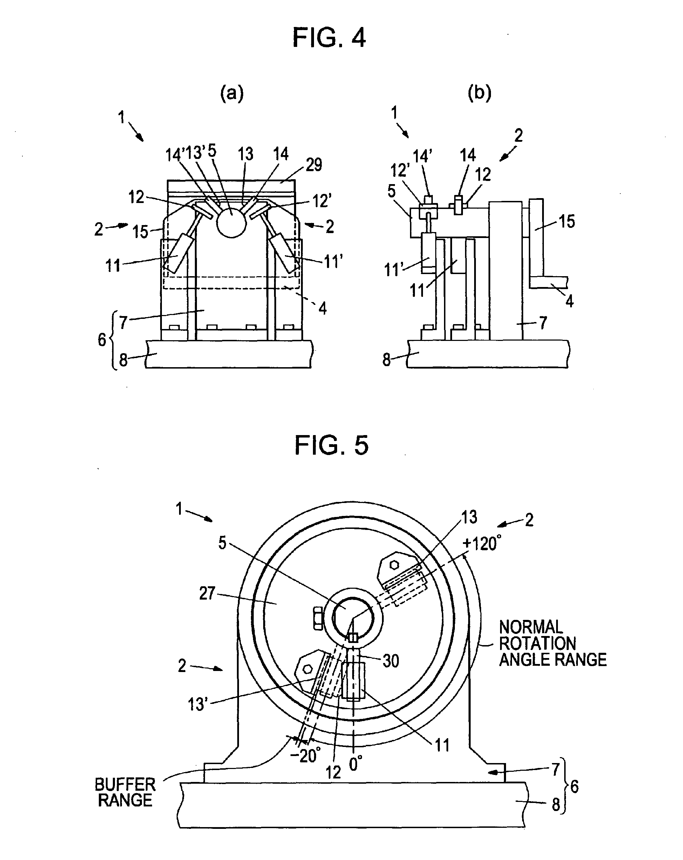

Figs. 4(a) and 4(b) illustrate another embodiment of the present invention. In this embodiment, a plurality of elastically displaceable members 11, 11' (hydraulic dampers) having pressure receiving surfaces 12, 12' are attached to a pedestal 8 through leg sections (not shown) at different positions in the axial direction of the rotary shaft 5. In addition, the rotary shaft 5 further extends toward the axial end, and a plurality of engaging levers 14, 14' having engaging surfaces 13, 13' extending in the radial direction of the rotary shaft 5 are provided at the rotary shaft 5. The engaging levers 14, 14' are provided to correspond to the pressure receiving surfaces 12, 12'. The elastically displaceable members 11, 11' are provided on the basis of the normal rotation angle range. In this embodiment, a circular table device 29 is mounted on a table 4. The angle at which the engaging surface 13 contacts the corresponding pressure receiving surface 12, 12' is properly determined similarly to the above-described embodiment.

Fig. 5 illustrates an embodiment in which an elastically deformable member 11 is provided at a rotary shaft 5, whereas engaging surfaces 13, 13' are provided at a frame 2. In this embodiment, the elastically deformable member 11 is provided to cover an arm 30, which is integrally attached to the rotary shaft 5 and extends outward in the radial direction of the rotary shaft 5. The elastically deformable member 11 is provided such that the elastically deformable member 11 of the arm 30 contacts the engaging surface 13, 13' and the outer peripheral surface of the elastically deformable member 11 applies reaction to the engaging surface 13, 13' while being retracted (or such that the elastically deformable member 11 is elastically deformed inward in the contact area of the elastically deformable member 11) when a rotary member 3 rotates beyond the normal rotation angle range. The elastically deformable member 11 uses a low-rebound foam.

### Industrial Applicability

The present invention can be widely used for indexing devices for tilting tables driven by direct-drive motors.

## Claims

1. A breakage preventing device (2) for a tilting table indexing device (1),
wherein the tilting table indexing device (1) includes
a rotary member (3) having a table (4) and a rotary shaft (5), the rotary shaft (5) extending in an extending direction of the table (4) and being integral with the table (4), and
a frame (6) having a pair of supporting devices (7, 7') and a pedestal (8), the supporting devices (7, 7') supporting both sides of the rotary shaft (5) and mounted on the pedestal (8),
wherein at least one of the supporting devices (7, 7') has built therein a direct-drive motor (9) and a holding mechanism (10), the direct-drive motor (9) driving the rotary shaft (5) for indexing an angle of the rotary shaft (5), the holding mechanism (10) holding the angle of the rotary shaft (5), and
wherein during an indexing operation of the table (4), the rotary shaft (5) is rotated by the direct-drive motor (9) to a desirable angle within a predetermined normal rotation angle range to tilt the table (4), and the tilt angle of the tilted table (4) is held by activation of the holding mechanism (10),
wherein the breakage preventing device (2) comprises an elastically displaceable member (11) and an engaging portion (13), the elastically displaceable member (11) provided at one of the rotary member (3) and the frame (6) and having a pressure receiving surface (12), the engaging portion (13) provided at the other of the rotary member (3) and the frame (6), the pressure receiving surface (12) and the engaging portion (13) provided so as to contact each other when at least the rotary shaft (5) rotates beyond the normal rotation angle range, and
wherein when the rotary shaft (5) rotates beyond the normal rotation angle range because of free rotation of the rotary member (3) in an emergency, the pressure receiving surface (12) of the elastically displaceable member (11) contacts the engaging portion (13) provided at the other of the rotary member (3) and the frame (6), is elastically displaced, and absorbs the kinetic energy of the rotary member (3) to stop the rotary member (3) during the free rotation before a danger angle range while the pressure receiving surface (12) of the elastically displaceable member (11) is elastically displaced.

2. The breakage preventing device (2) for the tilting table indexing device (1) according to claim 1, wherein the elastically displaceable member (11) is arranged such that the pressure receiving surface (12) of the elastically displaceable member (11) does not contact the engaging portion (13) provided at the other of the rotary member (3) and the frame (6) when the rotary shaft (5) is within the normal rotation angle range.

3. The breakage preventing device (2) for the tilting table indexing device (1) according to claim 1 or 2,
wherein an engaging lever (14) having the engaging portion (13) extending outward in a radial direction of the rotary shaft (5) is integrally provided with the rotary member (3), and
wherein the elastically displaceable member (11) is attached to the frame (6) at a position on a rotation path of the engaging lever (14) such that the pressure receiving surface (12) can contact the engaging portion (13) when the rotary shaft (5) rotates beyond the normal rotation angle range.

4. The breakage preventing device (2) for the tilting table indexing device (1) according to any of claims 1 to 3,
wherein the elastically displaceable member (11) supports the pressure receiving surface (12) displaceably in an advance-retract direction, and the elastically displaceable member (11) includes buffer means for applying reaction to the pressure receiving surface (12) when the pressure receiving surface (12) is retracted while the engaging portion (13) contacts the pressure receiving surface (12).
